# NEW EUROPEAN PATENT SPECIFICATION

(11) **EP 0 530 019 B2**
(45) Date of publication and mention of the opposition decision: **23.08.2000**
(45) Mention of the grant of the patent: 15.01.1997
(21) Application number: 92307812.5
(22) Date of filing: 27.08.1992
(51) Int. Cl.: B01D 53/26, B60T 17/00

(54) **Gas Dryer**
Gastrockner
Sécheur de gaz

(30) Priority: 30.08.1991 GB 9118658
(43) Date of publication of application: 03.03.1993
(73) Proprietor: Knorr-Bremse Systems for Commercial Vehicles Limited, Kingswood, Bristol BS15 2NL (GB)
(72) Inventor: Oliver, Patrick Ronald, Bristol BS15 6BE (GB)
(74) Representative: Turner, Alan Reginald

(56) References cited:
- EP-A- 0 036 569
- EP-A- 0 272 738
- EP-A- 0 405 073
- DE-C- 3 139 682
- US-A- 4 549 888

## Description

This invention relates to gas dryers and relates more especially but not exclusively to air dryers for compressed air braking systems of vehicles.

Compressed air systems are used to operate mechanical devices of many types. One common form of system which has become widely accepted is a compressed air brake system employed on heavy road vehicles. Such a system operates in adverse weather conditions but at the same time includes valve devices and components which are susceptible to damage or failure due to the ingress of contamination by water because corrosion and or freezing can occur. In view of this it is now usual to include an air dryer in such a system to ensure that significant moisture is extracted from the air used therein. Such an air dryer typically comprises a housing which is connected between an engine-operated compressor and the storage reservoir or reservoirs. The air dryer housing includes a chamber which contains a desiccant comprising a granular sodium alumina silicate molecular sieve compound which is highly hygroscopic. Such substance requires regeneration by metered purging from time to time by dry air and it is usual to effect such purging at times when the compressor is switched to an off-load condition following full recharge of the storage reservoir. Accordingly, the known air dryer has been provided with a discharge passage via which compressed air can be discharged from a special storage volume or a said storage reservoir itself and the volume of air discharged has been only arbitrarily related to the purge requirements of the desiccant.

EP-A-0272738 discloses an air drying system in which air from a compressor can pass through either one of two drying towers and then via a non-return valve to an air tank. While one tank is drying air from the compressor, the other tank is being regenerated. Air from the active tank is used to form a reverse air flow in the tank being regenerated.

EP-A-0405073 and EP-A-0036569 disclose air dryers in which pneumatic valves are used to control the volume of dried air that is used to regenerate the desiccant in the drying chamber. Whereas DE-C-3130682 illustrates Schematic Proposals for using electrically activated valves for such control.

According to the present invention there is provided a gas dryer comprising the features as defined in claim 1 with preferred embodiments as defined in the dependent claims.

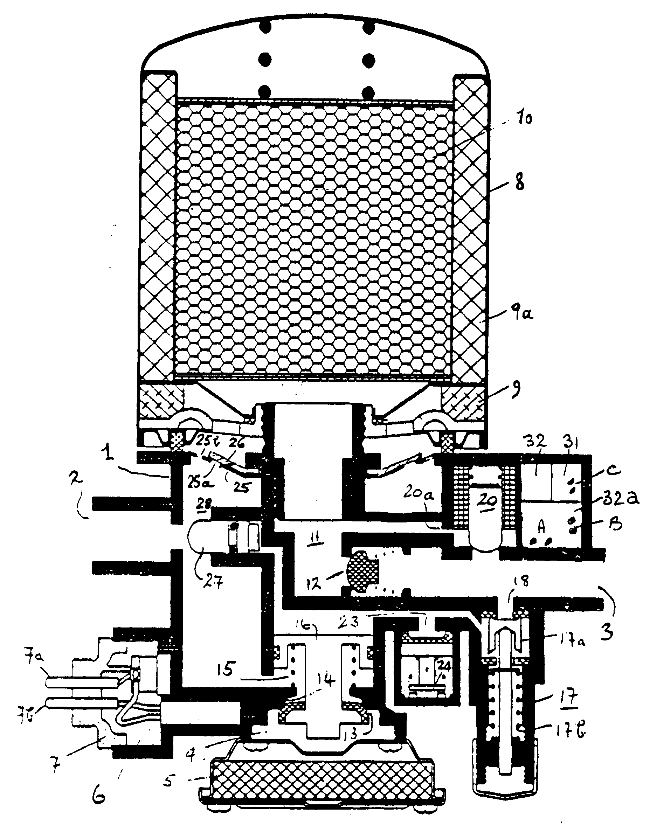

In order that the invention may be more clearly understood the same will be further described by way of example as illustrated in a diagrammatic form in the single figure of the accompanying drawings.

Referring to the drawing this illustrates one embodiment of an air dryer employing the invention. The air dryer comprises a main body 1, having an inlet port 2 for connection to a compressor, a delivery port 3 and a vent passage 4 fitted with a compressed aluminium mesh noise-reducing element 5. Another aperture 6 of the main body 1 is fitted with an insulating closure 7 carrying connector pins 7a, 7b to receive a two-pin electrical connector (not shown) typically for a 24 volt D.C. electrical supply to a heater and a thermostat. A further output port (not shown) on the body is connected to transmit the output of a governor 17 (to be referred to), to an unloader valve of the compressor. Mounted on the body 1 is a screw-on container 8 of well known type, containing an annular filter mesh 9, via which incoming air flows upward through a cylindrical filter 9a and thence downwards through a contained body of a granular desiccant 10 before passing to a one-way outflow passage 11 and via a check valve 12 to the delivery passage 3.

A purge valve member 13 is normally urged against its seat 14 by a spring 15 acting against a control piston 16 which is subject to the output pressure signal from a governor. The governor 17 senses the pressure of a predetermined delivery pressure in a small passage 18 connecting it to the delivery passage 3 such as to apply control pressure to piston 16 to open the purge valve member 13 from its seat 14 when a given pressure level is attained. The purge valve then remains open until a predetermined lower pressure level is attained.

In parallel with the one-way outflow passage 11 there is an electrical solenoid operated valve denoted by reference 20 providing a restricted gas flow path from the delivery passage 3 via a metering restriction 20a back to the desiccant. The valve 20 is operable by a control current supplied via an electrical connection (not shown( and a relay 32 by an electronic timer circuit 31 controlled by an electronic circuit board 32a supplied at terminals 'A' via the pins 7a and 7b referred to above. A fluid pressure responsive switch 24 which is normally open circuit but completes a circuit to terminals 'B' of electronics 32a and terminals 'C' of the timer 31 when the governor provides the control pressure in the passage 23. In a practical realisation of the invention, the switch 24, the solenoid 20, the electronic circuit 32a, timer 31 and relay 32 are preferably contained in a single module for insertion in a recess provided in the housing 1.

In the path from the port 2 and an inflow passage 28 to the container 8 there is also provided a fluid pressure operable inflow cut-off valve 27 actuable to its closed condition by the control pressure derived from the passage 18 via the governor 17. The inflow passage includes a baffle 25 having relatively large apertures 25a overlayed by flexible leaves 26 and smaller unobscured passages such as 25b. The baffle therefore provides relatively free flow from port 2 to the container 8 but more restricted flow, via apertures 25b, in the reverse direction.

The governor 17 is of a known type comprising a valve member 17a which is urged by a first predetermined pressure away from an upper sealing position shown against a spring 17b to a lower sealing position to transmit pressure from passage 18 as discussed above. The member 17a resets when the pressure in 18 falls to a second lower predetermined pressure.

In operation of the air dryer compressed air is normally supplied at port 2 from a compressor and via the inflow passage and restrictor baffle 25 upwards via filter mesh 9, and filter 9a to the region above the desiccant 10. After passing downwards through the desiccant 10 the dried air flows through the one-way passage via check valve 12 and the delivery passage 3 to storage reservoir (not shown).

When the delivered pressure attains the first preset level of the governor 17, the governor switches over to supply a control pressure from passage 18 to the above-mentioned output (not shown) port to set the compressor to its unloaded condition. Typically the compressor is a compressor which is unloaded by connecting a small additional clearance volume. At this time the pressure in passage 2 will therefore fall to a value which fluctuates around 5 bar whilst the compressor continues to run free. This pressure is retained by closure of the cut-off valve 27 by the governor output pressure.

The governor output pressure is also applied to the pressure switch 24 and also to the piston 16 to open the purge valve (14, 13) releasing the pressure from the housing and discharging any accumulated condensate in the lower part of the housing. The operation of the pressure switch 24 results in completion of the circuit to terminals 'C' of the timer and via terminals 'B' of the electronic circuit. The timer 31 therefore commences to time a control current via relay 32 to the solenoid valve 20 which opens for a preset maximum time interval. Dry air is thereby metered via metering restriction 20a from the storage reservoirs and upwards (reverse direction) through the desiccant and discharged via the purge valve. At the end of the preset time the timer resets interrupting the control signal to the relay 32 so that the valve 20 closes and purging ceases. The compressor may remain off-load and the purge valve 13, 14 may remain open until the lower pressure level setting of the governor is reached due to air usage from the reservoirs.

In the event that after initiation of a purge cycle a rapid reduction of delivery pressure occurs at terminal 3 due to excessive air consumption from the reservoirs, and the pressure descends below the second lower predetermined pressure of the governor 17. The output pressure from 17 therefore ceases opening switch 24, so that the circuits via terminals 'B' and 'C' to timer 31 and the electronic circuit 32a are interrupted and the current to solenoid valve 20 is cut off by the relay 32. The purge cycle is thereby foreshortened enabling the compressor to recharge the reservoirs. On subsequent operation of pressure switch 24 a full length purge cycle can then be re-started by reactivation of the timer.

The inflow cut-off valve 27 is operated to the closed condition as soon as the inlet pressure within the main body has fallen sufficiently for the governor pressure signal to move the valve member of 27 leftwards as seen in the drawing. The valve 27 thereby substantially isolates the output of the compressor from the air dryer whilst the purge valve is open. This ensures that the compressor clearance volume is not vented via the air dryer and can also avoid engine disadvantages which can also result from purging an air dryer which is supplied from a turbocharger-fed air compressor.

The above mentioned more restricted flow via openings 25b has little effect upon the purging action metering of which is effected by the restriction 20a but 25b serves to restrict the instantaneous energy dissipation and therefore the noise produced when the purge valve 13, 14 opens.

## Claims

1. A gas dryer comprising, a body (1) carrying a chamber (8) containing desiccant material (10) said chamber having an inflow passage (28) communicating with an inlet passage (2) of the body, and a one-way outflow passage (11) containing a non-return valve (12) and communicating with a delivery passage (3) the body, and a purge valve (13,14) responsive to and operable by a pressure signal from a governor indicative of attainment of a predetermined delivered pressure in said delivery passage to connect said inflow passage (28) to a vent port (4), and an electric switch (24) responsive to and operable by said pressure signal from the said governor to initiate an electric timer device (31) controlling energisation of an electrically operable valve (20) for permitting restricted dried gas flow from a delivery port (3) located at the output side of the non-return valve (12) to said vent port (4) via said desiccant (10) said inflow passage (28) and said purge valve (13, 14).

2. A gas dryer as claimed in claim 1, characterised in that said electrically operable valve (20) is a solenoid valve and the gas dryer includes an electrical relay (32) responsive to said timer for applying energising current to the solenoid of the solenoid valve.

3. A gas dryer as claimed in claim 1 or 2, said electric switch being included in circuits to said timer and a supply circuit to an electronic circuit board (32a).

4. A gas dryer as claimed in claim 2, characterised in that said solenoid of the solenoid valve, said relay (31) and said timer are included in a discrete module housed in a recess of said body.

## Patentansprüche

1. Ein Gastrockner, welcher einen Grundkörper (1) umfasst, der eine ein Trocknungsmaterial (10) enthaltende Kammer (8) trägt, wobei die Kammer eine Einströmleitung (28) besitzt, welche mit einem Einlasskanal (2) des Grundkörpers in Strömungsverbindung steht, sowie eine Einweg-Ausströmleitung (11), die ein Einwegventil (12) enthält und mit einem Förderleitung (3) des Grundkörpers und einem Absaugventil (13, 14) in Strömungsverbindung steht, welches auf ein von einem Regler kommendes Drucksignal anspricht und durch dieses betätigbar ist, welches die Erreichung eines vorbestimmten Förderdrucks in der Förderleitung in der Weise anzeigt, dass die Einströmleitung (28) mit einem Lüftungsanschluss (4) verbunden wird, und einen elektrischen Schalter (24), der auf das Drucksignal anspricht und durch dieses in der Weise betätigbar ist, dass eine elektrische Zeitschaltvorrichtung (31) angesteuert wird, damit es die Stromversorgung eines elektrisch betätigbaren Ventils (20) steuert, so dass ein eingeschränkter Strom getrockneten Gases von einer Förderanschluss (3), der sich auf der Auslassseite des Einwegventils (12) befindet, zu dem Lüftungsanschluss (4) über das Trocknungsmittel (10), die Einströmleitung (28) und das Absaugventil (13, 14) ermöglicht wird.

2. Ein Gastrockner nach Anspruch 1, dadurch gekennzeichnet, dass das elektrisch betätigbare Ventil (20) ein Magnetventil ist, und dass der Gastrockner ein elektrisches Relais (32) aufweist, welches auf die Zeitschaltvorrichtung anspricht, welche den Elektromagneten des Magnetventils mit Strom versorgt.

3. Ein Gastrockner nach Anspruch 1 oder 2, bei welchem der elektrische Schalter in mit der Zeitschaltvorrichtung verbundene Schaltkreise einbezogen ist sowie in eine Versorgungsschaltung, die mit einer elektronischen Schalttafel (32a) verbunden ist.

4. Ein Gastrockner nach Anspruch 2, dadurch gekennzeichnet, dass der Elektromagnet des Magnetventils, das Relais (31) und die Zeitschaltvorrichtung in ein gesondertes Modul einbezogen sind, welches in einer Ausnehmung des Grundkörpers aufgenommen ist.

## Revendications

1. Sécheur de gaz comprenant un corps (1) supportant une chambre (8) contenant un matériau déshydratant (10), ladite chambre comprenant un passage d'entrée de flux (28) qui communique avec un passage d'entrée (2) du corps, et un passage de sortie de flux (11) à une voie comportant une soupape anti-retour (12) et communiquant avec un passage (3) de sortie du corps, et une soupape de purge (13,14) sensible à un signal de pression issu d'un contrôleur et pouvant être actionnée par celui-ci et indiquant qu'est atteinte une pression prédéterminée de sortie dans le passage de sortie pour relier le passage d'entrée de flux (28) à un orifice d'évent (4), et un commutateur électrique (24) sensible à un signal de pression issu du contrôleur et pouvant être actionné par ce signal de pression de façon à initier un dispositif (31) électrique de temporisation qui commande l'alimentation d'une soupape (20) pouvant être actionnée électriquement pour permettre un écoulement restreint de gaz séché provenant d'un orifice de sortie (3) situé du côté sortie de la soupape anti-retour (12) en direction de l'orifice d'évent (4) à travers le déshydratant (10), le passage d'entrée de flux (28) et la soupape de purge (13,14).

2. Sécheur de gaz selon la revendication 1, caractérisé en ce que la soupape (20) actionnée électriquement est une soupape à électroaimant, et le sécheur de gaz comprend un relais électrique (32) sensible au dispositif temporisateur pour appliquer un courant d'alimentation à l'électroaimant de la soupape à électroaimant.

3. Sécheur de gaz selon la revendication 1 ou 2, dans lequel le commutateur électrique est monté en circuit avec le dispositif de temporisation et un circuit d'alimentation d'une plaquette de circuit électronique (32a).

4. Sécheur de gaz selon la revendication 2, caractérisé en ce que l'électroaimant de la soupape à électroaimant, le relais (31) et le dispositif de temporisation sont inclus dans un module séparé logé dans une cavité du corps.
